# EUROPEAN PATENT SPECIFICATION

(11) **EP 3 604 201 B1**
(45) Date of publication and mention of the grant of the patent: **10.11.2021**
(21) Application number: 19184718.5
(22) Date of filing: 05.07.2019
(51) Int. Cl.: G01G 19/08, B66F 9/22, G01G 5/04

(54) **HYDRAULIC WEIGHT DETERMINATION**
HYDRAULISCHE GEWICHTSBESTIMMUNG
DÉTERMINATION DE POIDS HYDRAULIQUE

(30) Priority: 01.08.2018 DK PA201800435
(43) Date of publication of application: 05.02.2020
(73) Proprietor: Tamtron Oy, 33580 Tampere (FI)
(72) Inventor: HANSEN, Torben Winther, 3720 Aakirkeby (DK)
(74) Representative: Heinonen & Co

(56) References cited:
- EP-A1- 1 893 955
- WO-A1-2017/186247
- WO-A1-2017/202434
- CN-A- 107 857 212

## Description

The invention relates to a method and a weighing device for weight determination of a load lifted by a hydraulic lifting device, such as a forklift truck, front loader or telescopic loader, and which comprises a hydraulic actuator to perform the lifting action. The weight determination is based on at least one upward and one downward displacement of the actuator where the actuator pressure is measured during the displacement by means of a pressure gauge and where a constant and identical speed is maintained for the displacement of the actuator in both directions by measuring and regulating the flow to the actuator and that a deviation-dependent signal is generated which signals that the actuator displacement speed is constant and is of a value set by means of a setpoint and wherein preferably an inclination-dependent signal is generated by measuring the inclination of the actuator relative to the direction of the gravity in two axes at right angles to each other by means of an inclination gauge. The pressure signal, the deviation-dependent signal and the inclination signal are connected to a display unit which performs the weight determination based on the measured pressure signal, the deviation-dependent signal and the inclination signal.

Weight determination of the above nature is used in connection with transportation of for example goods, sand and stones. The method is used in weighing systems mounted on various devices such as forklift trucks, front loaders and telescopic loaders whereby the weight of the cargo can be determined without driving to a remote stationary weighing system. In some known methods, weight determination is performed while the hydraulic lifting device is moving in order to reduce the friction of bearings, sliding surfaces and actuators since dynamic friction is lower than static friction.

In a known method, DK 2016 70282 (A1), weight determination of a load is performed using at least one upward and one downward displacement of the lifting device where the lifter is displaced by means of a hydraulic actuator in a hydraulic system. The hydraulic flow in the hydraulic system is limited by a two-way flow control. A pressure signal and a position signal are generated and the weight determination is performed based on these. This document discloses the preamble of claims 1 and 7.

In another known method, DE4328148 (A1), this is performed in a hydraulic forward flow or a hydraulic return flow with the result that the lifting device is either lifted or lowered at an even speed while recording the weight of the load. As a disadvantage of this method, the measuring accuracy is relatively poor since measuring errors of up to between ±1% and ±2% of the lifting capacity of the lifting device have to be allowed for. The reason for this relatively pronounced inaccuracy is the mechanical friction in the lifting device which consumes part of the force exerted by the load and also changes from one hour to the next. A hydraulic pressure drop is generated inside the hydraulic tubing between the actuator and the pressure gauge as a result of the flow, which contributes with additional measuring errors. This pressure drop changes with the magnitude of the flow and the viscosity of the hydraulic medium which is dependent on the temperature of the medium. Because hydraulic systems generate heat, the viscosity of the medium and thereby the accuracy of the weight determination depend on various factors such as the duration of the operating period for the lifting device.

A third known method, EP1893955 (B1), uses measurement of the pressure and the flow when the load is lifted and lowered, respectively, and thereby balances the error sources that change the operational sign with the direction of the actuator displacement and by compensating for the differing and varying displacement speeds of the actuator. Due to the viscosity changes in the hydraulic medium, obtaining an appropriate and reliable weighing accuracy remains a challenge. Furthermore, hydraulic lifting devices are often used with vehicles that are not positioned on a horizontal base, which generates weighing errors as a result of the inclination of the lifting device relative to the direction of gravity.

This invention provides a method that will considerably reduce weighing errors by regulating and maintaining a constant and identical actuator displacement speed in both directions and in particular by generating a deviation-dependent signal which ensures that pressure measurements are recorded only under the conditions mentioned, which eliminates weighing errors as a result of acceleration forces and weighing errors as a result of changes in the hydraulic medium viscosity due to its varying temperature. This method also compensates for the inclination of the lifting device relative to the direction of the gravity as a result of the characteristics of the base or tilting of the lifting device in case of heavy loads. As a result of the benefits mentioned, a weighing accuracy in the order of ±0.1% of the lifting capacity of the lifting device can be achieved, even under less favourable conditions.

According to the invention, this is achieved by recording a deviation-dependent parameter for the actuator displacement speed, by regulating the actuator speed by means of a regulation parameter, by recording an inclination-dependent parameter, and by determining the weight as dependent on the deviation-dependent parameter and on a regulation parameter for the actuator regulation and on the inclination-dependent parameter.

The invention is based on the physical law that the mechanical friction between two surfaces is a force which will seek to prevent movement and which is proportional to the normal force with which the two surfaces impact on each other and is unrelated to the size of the surfaces. As a result of this, the direction of the friction is opposite to the direction of movement exerted by the surfaces. The invention is also based on the physical law that the size and direction of a hydraulic pressure drop in a tube which contains a flow, also depends on the magnitude and direction of the flow. Provided the actuator displacement takes place at a constant and identical speed (via a variable pump or other form of flow regulator), this means that the friction and pressure drop resulting from the actuator displacement are identical in both directions but that the operational signs change with the direction of displacement. The operational sign of the force exerted by the load remains the same, however, even though the direction of the actuator displacement changes. Consequently, through multiplication with a proportionality constant half the sum of the recorded pressure values, measured via a pressure gauge during the upward and subsequent downward movement of the actuator, is an expression of the weight of the load and the lifted components of the lifting device. Since the friction values are identical for both directions although opposites, their sum is zero, which also applies to the pressure drop in the tubing where the sum of the pressure drop is zero. In order to ensure accurate weight determination, the actuator displacement speed must be regulated and stay constant and of the same magnitude in both directions and there must be a signal that, when the deviation is sufficiently small, alerts the display unit to start recording the pressure exerted by the actuator.

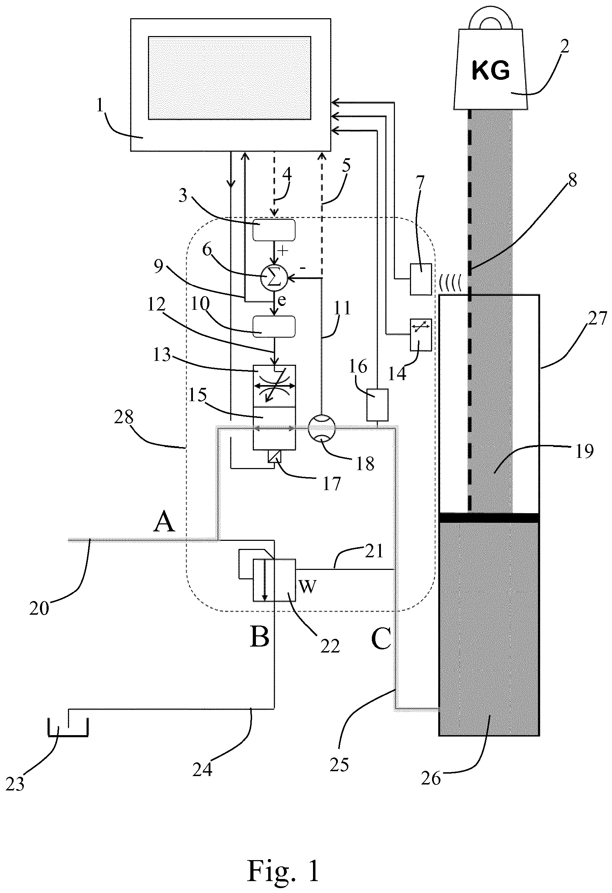

When the invention is in neutral position, as shown in Fig. 1, the weight determination function is not active. In this position, the hydraulic flow merely passes through the invention using the flow route indicated by the unbroken line whereby the hydraulic lifting device can be used as is customary.

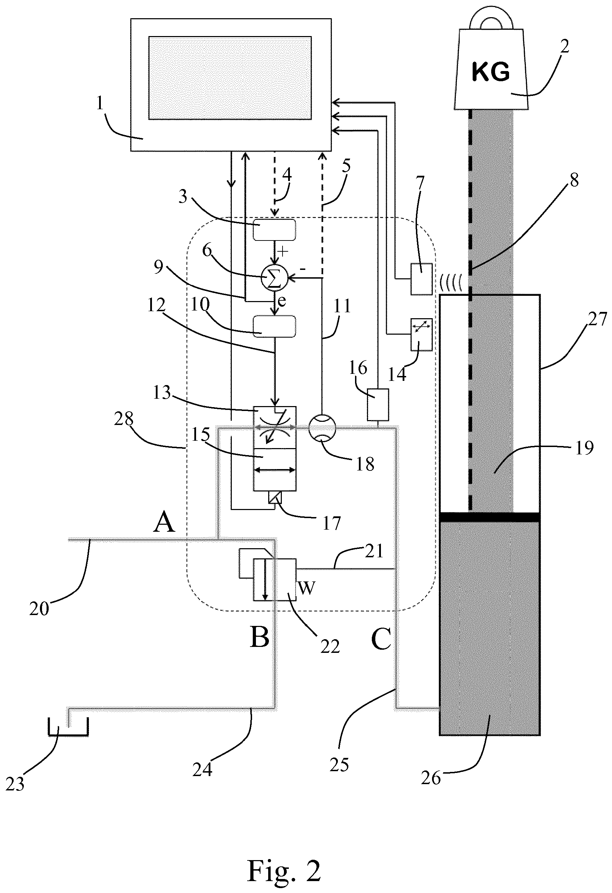

When the invention is in weighing position, as shown in Fig. 2, the weight determination procedure is performed; for this procedure the load, which is lifted by the actuator, is subjected to at least one upward and one downward displacement and the hydraulic pressure in the actuator is measured by means of a pressure gauge. The weighing procedure is initiated by activation of the display unit; this supplies a solenoid with current thereby closing a bypass valve and this establishes a flow route marked by the unbroken line. Following this, a flow equivalent to at least the magnitude of a flow as set by means of a pre-defined setpoint is fed to the hydraulic lifting device. As a result of this, the flow passes into the tubing through a flow regulator and through the flow gauge to an actuator that lifts the load. If the flow fed is larger than the flow set using the setpoint, the excessive flow will pass through a pressure relief valve and return to the tank, which reduces the power loss in the flow regulator when the load is lifted. During the displacement of the actuator a flow signal proportional to the actuator displacement speed is sent to a summation point where the flow signal is compared with the setpoint flow which is equivalent to a given actuator displacement speed. This provides a deviation-dependent signal which via a process unit controls that the flow regulator maintains the displacement speed set in the setpoint. The deviation-dependent signal is transmitted to the display unit and here used as a criterion to determine when a constant and desired actuator speed has been reached and when the display unit should start recording the pressure in the actuator. When the criterion has been met, the display unit records the pressure for a few seconds and then demands the load to be lowered, whereby the flow returns from the actuator along the same route as during the lift, only in the opposite direction. During the lowering procedure, the actuator displacement speed is controlled in the same manner as during the lifting procedure; the flow signal, however, changes operational sign which can be allowed for in various ways. After a period of time equivalent to the one for the lifting procedure, the display unit has recorded the pressure for the actuator displacement in both directions and the display unit can now perform the weight determination procedure. During the above weighing process, the actuator inclination, which is preferably part of the weight determination, is recorded. The actuator position is detected by a position gauge which gives a position signal to be used in the weight determination. As an example, the hydrostatic pressure generated by the hydraulic medium depends on the position of the actuator, and on forklift trucks the varying length of chains and hydraulic tubing contributes to the pressure generated by the load. Using a position signal, the above error sources can be eliminated. In order to avoid unnecessary power consumption, a pressure relief system has been introduced to reduce the hydraulic pressure during the upward actuator displacement action. If the flow fed when lifting the load is larger than necessary in order to obtain the lifting speed defined using the setpoint, the excess flow will return to the tank through a pressure relief valve at exactly the pressure necessary to lift the load. Especially for heavy loads, natural oscillations (second order components) in the lifting device are a problem. This problem is solved by detecting variations in either the pressure signal or the inclination signal and waiting to complete the weighing process until the oscillations have stopped. Since the temperature in the hydraulic system is of significance, among others for the accuracy of the pressure gauge, temperature variations are measured and compensated for by means of a temperature gauge which might form an integral part of the pressure gauge. To determine the dead load of various components of the lifting device, for example the actuator piston rod, a special weight determination procedure is performed without load (resetting); this is done only once. In subsequent weight determination procedures the above dead load is subtracted from the weighing result obtained in the weight determination of the load.

In a special method for weight determination, a parameter, which is dependent on the position of the actuator, is measured by means of a position gauge. This compensates for position-dependent erroneous contributions, for example from variations in the length and weight of chains and tubing in the lifting device.

In another method for weight determination, a pressure relief system is introduced to reduce the pressure and power consumption during actuator displacement in upward direction. During the displacement of the actuator, the flow is fed into the tubing, passes to a flow regulator and through the flow gauge to an actuator that lifts the load. If the flow fed is larger than the flow value set using the setpoint, the excessive flow will pass through a pressure relief valve and return to the tank, which gives maximum reduction of the loss in power consumption.

In a method for weight determination, an oscillation-dependent parameter for dampened oscillations in the lifting device is measured by means of a pressure gauge or an inclination gauge. Based on this oscillation-dependent parameter recording of the actuator pressure awaits until the oscillations have been reduced sufficiently to avoid interfering weight contributions.

In a method for weight determination a temperature-dependent parameter is measured via the hydraulic medium by means of a temperature gauge, which can form an integral part of the pressure gauge. Based on the temperature-dependent parameter, temperature-dependent measuring errors are compensated for.

For the embodiment of the weighing device comprising a display unit containing a processor for weight determination of a load lifted by an actuator, the weight determination is based on displacement of the actuator in both directions, where a hydraulic pressure signal is measured, and where a deviation signal to regulate the displacement of the actuator is generated via a flow signal, a setpoint and a summation point, and where the inclination of the actuator is measured, and where the pressure measured in the actuator is compensated for this inclination, and where the display unit is designed to record a deviation signal for the actuator speed to determine when to record the pressure measurements. This produces an exceptionally high weighing accuracy in the order of ±0.1% of the lifting capacity of the lifting device.

In a special embodiment of the weighing device, where the actuator position is determined in one or more points by means of a position gauge and via one or more position sensors, the position measurement is based on either magnetic, inductive, optic or ultrasonic principles whereby several ways of compensating for position-dependent weighing errors are achieved.

In another embodiment of the weighing device, a pressure relief valve is present which reduces the hydraulic pressure and the power consumption such that only the pressure required to perform the weight determination is maintained whereby the power consumption is minimised.

In an embodiment of the weighing device where the natural oscillations of the lifting device are detected via oscillations of the pressure signal or the inclination signal, recording of the actuator pressure awaits until the oscillations in the lifting device have seized, whereby interference with the weighing accuracy is avoided.

In an embodiment of the weighing device where the temperature of the hydraulic medium is measured by a temperature gauge and where the pressure gauge is exposed to temperature variations, for example via the ambient environment or heated hydraulic medium, temperature-dependent measuring errors generated by the pressure gauge are compensated for whereby an improvement of the temperature stability is achieved.

The invention is explained in detail below with reference to the two drawings in Fig. 1 and Fig. 2.

Fig. 1 shows the invention in neutral position where the weight determination function is not in operation and where the lifting device is used in the customary way, and

Fig. 2 shows the invention in the weighting position where the weight determination is performed together with a hydraulic lifting device comprising an actuator carrying a load.

In the neutral position in Fig. 1, the weight determination function is not in operation whereby the flow 20 merely passes through the tubing of the invention along the flow route marked by the unbroken line. As a result of this, the flow 20 enters the tubing through a bypass valve 15 and through a gauge 18 measuring the flow to an actuator 27 whereby the load 2 is lifted.

In the weighing position in Fig. 2, the weight determination procedure relies on the circumstance that the load 2, which is lifted by the actuator 27, is subjected to at least one upward and one downward displacement and that the hydraulic pressure in the actuator 27 is measured by means of a pressure gauge 16. The weighing procedure is initiated by activation of the display unit 1, which supplies a solenoid 17 with current thereby closing the bypass valve 15; this establishes a flow route marked by the unbroken line. Following this, a flow 20 equivalent to at least the magnitude of a flow as set by means of a pre-defined setpoint 3 is fed to the hydraulic lifting device. As a result of this, the flow passes into the tubing through a flow regulator 13 and through the flow gauge 18 to an actuator 27 that lifts the load 2. If the flow fed is larger than the flow set using the setpoint 3, the excessive flow 24 will pass through a pressure relief valve 22 and return to the tank 23, which reduces the power loss in the flow regulator 13 when the load 2 is lifted. During the displacement of the actuator 27 a flow signal 11 proportional to the actuator displacement speed is sent to a summation point 6 where the flow signal 11 is compared with the setpoint 3 flow which is equivalent to a given actuator displacement speed. Thereby a deviation-dependent signal 9 is generated which via a process unit 10 and a regulation signal 12 controls that the flow regulator 13 maintains the actuator displacement speed which is set by the setpoint 3. In an alternative embodiment of the invention, where connections 4 and 5 are established, parts of or the entire regulation circuit, consisting of 3, 6 and 10, can be performed by the display unit 1. The deviation-dependent signal 9 is transmitted to the display unit 1, where it is used as a criterion to determine when a constant and desired actuator speed has been reached and when the display unit 1 should start recording the hydraulic pressure. When the criterion has been met, the display unit 1 records the pressure for a few seconds and then demands the load 2 to be lowered, whereby the flow 25 returns from the actuator 27 along the exact same route as during the lift, only in the opposite direction. During the lowering procedure, the actuator displacement speed is controlled in the same manner as during the lifting procedure; the flow signal 11, however, changes operational sign which can be allowed for in various ways. After a period of time equivalent to the one for the lifting procedure, the display unit 1 has recorded the pressure for the actuator displacement in both directions and the display unit 1 can now perform the weight determination procedure. During the above weighing process, the inclination of the actuator 27 is recorded via a dual-axis inclination gauge 14 and an inclination signal is generated which is used in the weight determination in order to render it more accurate. Improvement is achieved through a process whereby a position gauge 7 detects the position of the actuator 27 via one or more position sensors 8 and generates a position signal which is used in the weight determination. As an example, the hydrostatic pressure generated by the hydraulic medium 26 depends on the position of the actuator, and on forklift trucks the varying length of chains and hydraulic tubing contributes to a variable pressure, in addition to the pressure generated by the load 2. In another method, the weight determination always starts at the same actuator position which can be performed by means of a simple position gauge in only a single point. Using the position-dependent signal, the above error contributions can be determined and eliminated. Another improvement has been achieved by introducing a pressure relief valve 22, which reduces the hydraulic pressure thereby avoiding unnecessary power consumption during upward actuator displacement. If the flow fed when lifting the load 2 is larger than necessary in order to obtain the lifting speed defined using the setpoint 3, the excess flow 24 will return to the tank 23 through a pressure relief valve 22 at exactly the pressure necessary to lift the load 2 and defined by the pilot pressure 21. One more improvement has been achieved in that natural oscillations in the lifting devices are detected, either via variations in the signal from the pressure gauge 16 or from the inclination gauge 14, in order to postpone the weighing process until the oscillations have stopped. The weighing accuracy is improved by measuring and compensating for temperature changes in the hydraulic system. The temperature is measured via a temperature gauge which may form an integral part of the pressure gauge 16. This way, temperature-dependent measuring errors produced by the pressure gauge can be reduced considerably.

To determine the dead load of various components of the lifting device, for example the actuator piston rod 19, a special weight determination procedure is performed without load resetting; this is done only once. In subsequent weight determination procedures, the above dead load is subtracted thereby producing the weight of the load.

The invention comprising components 28, a display unit 1 and a position sensor 8 can either be provided in a single unit or be decentralised such that certain components of the invention, such as flow regulator 13, pressure relief valve 22 or similar, can form part of the structure of the hydraulic lifting device.

## Claims

1. Method for weight determination of a load (2) lifted by an actuator (27), where the weight determination is based on at least one upward and one downward displacement of the actuator, where the actuator is displaced due to a flow (20) initiated in a hydraulic tubing system, where the hydraulic pressure is measured by means of a pressure gauge (16), whereby a pressure signal is generated, and that a deviation-dependent parameter (9) is generated via a flow signal (11), which is based on the actuator displacement speed, and via a setpoint (3), and that a regulation parameter (12) is generated based on this for regulation of the actuator, **characterized in that** a deviation-dependent parameter is recorded by means of a regulation parameter, and **in that** the weight determination is performed depending on the deviation-dependent parameter and on the regulation parameter.

2. Method for weight determination according to claim 1, wherein a parameter, which is dependent on the actuator position, is measured by means of a position gauge (7) and a position sensor (8), whereby a position-dependent parameter is generated, and wherein the weight determination is performed depending on the position-dependent parameter.

3. Method for weight determination according to any one of the preceding claims, wherein a pressure relief system (22) is introduced to reduce pressure and power consumption, and wherein the weight determination is performed by means of this pressure relief system to reduce the power consumption.

4. Method for weight determination according to any one of the preceding claims, wherein a parameter, which is dependent on dampened oscillations in the lifting device, is generated via a pressure signal or an inclination signal, whereby an oscillation-dependent parameter is generated, and wherein the weight determination is performed depending on the oscillation-dependent parameter.

5. Method for weight determination according to any one of the preceding claims, wherein a parameter, which is dependent on the temperature of the hydraulic medium, is measured by means of a temperature gauge which may form an integral part of the pressure gauge (16), whereby a temperature-dependent parameter is generated, and wherein the weight determination is performed depending on the temperature-dependent parameter.

6. Method for weight determination according to any one of the preceding claims, wherein the actuator inclination relative to the direction of the gravity is measured by means of an inclination gauge (14), whereby an inclination parameter is generated, and an inclination-dependent parameter is recorded, and wherein the weight determination is performed depending on the inclination-dependent parameter,

7. A weighing device consisting of a system which comprises a processor for weight determination of a load lifted by an actuator, where the weight determination is based on at least one upward and one downward displacement of the actuator, where the actuator is displaced due to an initiated flow (20) in a hydraulic tubing system, where the hydraulic pressure is measured by means of a pressure gauge (16), whereby a pressure signal is generated, and that a deviation signal (9) is generated via a flow signal (11), which is based on the actuator displacement speed, and a setpoint (3), and that a regulation signal (12) to regulate the actuator is generated based on the deviation signal, and that the regulation signal, among others, is generated by way of but not limited to hydraulics, mechanics, electronics, software or a combination thereof, **characterized in that** the weighing device is designed to record a deviation signal and to use a regulation signal and to perform the weight determination depending on the deviation signal and on the regulation signal.

8. Weighing device according to claim 7, comprising a position gauge (7) and a position sensor (8) **characterized by** position measurement in either one point or several points based on, among others, magnetic, inductive, optic, mechanical, hydraulic or ultrasonic principles.

9. Weighing device according to any one of claims 7 or 8, wherein a pressure relief valve (22) has been introduced to reduce the pressure and the power consumption, and wherein the pressure relief valve reduces the power consumption.

10. Weighing device according to any one of claims 7 to 9, wherein dampened oscillations of the pressure signal or the inclination signal of the lifting device are measured, whereby an oscillation signal is generated, and wherein the weight determination is performed depending on the oscillation signal.

11. Weighing device according to any one of claims 7 to 10, wherein the temperature of the hydraulic medium is measured by means of a temperature gauge which may form an integral part of the pressure gauge (16), whereby a temperature signal is generated, and wherein the weight determination is performed depending on the temperature signal.

12. Weighing device according to any one of claims 7 to 11, wherein the actuator inclination relative to the direction of the gravity is measured by means of an inclination gauge (14), whereby an inclination signal is generated, and wherein the weighing device is designed to record an inclination signal and to perform the weight determination depending on the inclination signal,

## Patentansprüche

1. Verfahren zur Gewichtsbestimmung einer Last (2), die durch einen Aktuator (27) angehoben wird, wobei die Gewichtsbestimmung zumindest auf einer Aufwärts- und einer Abwärtsverschiebung des Aktuators basiert, wobei der Aktuator aufgrund einer Strömung (20), die in einem hydraulischen Rohrleitungssystem eingeleitet wird, verschoben wird, wobei der hydraulische Druck mithilfe eines Druckmessers (16) gemessen wird, wodurch ein Drucksignal erzeugt wird, und wobei ein abweichungsabhängiger Parameter (9) über ein Strömungssignal (11), das auf der Aktuatorverschiebungsgeschwindigkeit basiert, und über einen Einstellpunkt (3) erzeugt wird, und wobei ein Regulierungsparameter (12) zur Regulierung des Aktuators darauf basierend erzeugt wird, **dadurch gekennzeichnet, dass** ein abweichungsabhängiger Parameter mithilfe eines Regulierungsparameters aufgezeichnet wird, und dass die Gewichtsbestimmung abhängig von dem abweichungsabhängigen Parameter und dem Regulierungsparameter ausgeführt wird.

2. Verfahren zur Gewichtsbestimmung nach Anspruch 1, wobei ein Parameter, der von der Aktuatorposition abhängig ist, mithilfe eines Positionsmessers (7) und eines Positionssensors (8) gemessen wird, wodurch ein positionsabhängiger Parameter erzeugt wird, und wobei die Gewichtsbestimmung abhängig vom positionsabhängigen Parameter ausgeführt wird.

3. Verfahren zur Gewichtsbestimmung nach einem der vorhergehenden Ansprüche, wobei ein Druckentlastungssystem (22) zum Verringern von Druck und Leistungsverbrauch eingeführt wird, und wobei die Gewichtsbestimmung mithilfe dieses Druckentlastungssystems zum Verringern des Leistungsverbrauchs ausgeführt wird.

4. Verfahren zur Gewichtsbestimmung nach einem der vorhergehenden Ansprüche, wobei ein Parameter, der von gedämpften Schwingungen in der Hebevorrichtung abhängig ist, über ein Drucksignal oder ein Neigungssignal erzeugt wird, wodurch ein schwingungsabhängiges Signal erzeugt wird, und wobei die Gewichtsbestimmung abhängig vom schwingungsabhängigen Parameter ausgeführt wird.

5. Verfahren zur Gewichtsbestimmung nach einem der vorhergehenden Ansprüche, wobei ein Parameter, der von der Temperatur des hydraulischen Mediums abhängt, mithilfe eines Temperaturmessers, welcher ein einstückiges Teil des Druckmessers (16) ausbilden kann, gemessen wird, wodurch ein temperaturabhängiger Parameter erzeugt wird, und wobei die Gewichtsbestimmung abhängig vom temperaturabhängigen Parameter ausgeführt wird.

6. Verfahren zur Gewichtsbestimmung nach einem der vorhergehenden Ansprüche, wobei die Aktuatorneigung bezüglich der Richtung der Schwerkraft mithilfe eines Neigungsmessers (14) gemessen wird, wodurch ein Neigungsparameter erzeugt wird und ein neigungsabhängiger Parameter aufgezeichnet wird, und wobei die Gewichtsbestimmung abhängig vom neigungsabhängigen Parameter ausgeführt wird.

7. Wiegevorrichtung, die aus einem System besteht, das einen Prozessor zur Gewichtsbestimmung einer Last, die durch einen Aktuator angehoben wird, umfasst, wobei die Gewichtsbestimmung zumindest auf einer Aufwärts-und einer Abwärtsverschiebung des Aktuators basiert, wobei der Aktuator aufgrund einer in einem hydraulischen Rohrleitungssystem eingeleiteten Strömung (20) verschoben wird, wobei der hydraulische Druck mithilfe eines Druckmessers (16) gemessen wird, wodurch ein Drucksignal erzeugt wird, und wobei ein Abweichungssignal (9) über ein Strömungssignal (11), das auf der Aktuatorverschiebungsgeschwindigkeit basiert, und über einen Einstellpunkt (3) erzeugt wird, und wobei ein Regulierungssignal (12) zur Regulierung des Aktuators auf dem Abweichungssignal basierend erzeugt wird, und wobei u.a. das Regulierungssignal u.a. durch Hydraulik, Mechanik, Elektronik, Software oder eine Kombination davon erzeugt wird, **dadurch gekennzeichnet, dass** die Wiegevorrichtung zum Aufzeichnen eines Abweichungssignals und zum Benutzen eines Regulierungssignals und zum Ausführen der Gewichtsbestimmung abhängig vom Abweichungssignal und vom Regulierungssignal konfiguriert ist.

8. Wiegevorrichtung nach Anspruch 7, umfassend einen Positionsmesser (7) und einen Positionssensor (8), **gekennzeichnet durch** Positionsmessung entweder an einem Punkt oder mehreren Punkten basierend u.a. auf magnetischen, induktiven, optischen, mechanischen, hydraulischen oder Ultraschallprinzipien.

9. Wiegevorrichtung nach einem der Ansprüche 7 oder 8, wobei ein Druckentlastungsventil (22) zum Verringern des Drucks und des Leistungsverbrauchs eingeführt wurde, und wobei das Druckentlastungsventil den Leistungsverbrauch verringert.

10. Wiegevorrichtung nach einem der Ansprüche 7 bis 9, wobei gedämpfte Schwingungen des Drucksignals oder des Neigungssignals der Hebevorrichtung gemessen werden, wodurch ein Schwingungssignal erzeugt wird, und wobei die Gewichtsbestimmung abhängig vom Schwingungssignal ausgeführt wird.

11. Wiegevorrichtung nach einem der Ansprüche 7 bis 10, wobei die Temperatur des hydraulischen Mediums mithilfe eines Temperaturmessers, der ein einstückiges Teil des Druckmessers (16) ausbilden kann, gemessen wird, wodurch ein Temperatursignal erzeugt wird, und wobei die Gewichtsbestimmung abhängig vom Temperatursignal ausgeführt wird.

12. Wiegevorrichtung nach einem der Ansprüche 7 bis 11, wobei die Aktuatorneigung bezüglich der Richtung der Schwerkraft mithilfe eines Neigungsmessers (14) gemessen wird, wodurch ein Neigungssignal erzeugt wird, und wobei die Wiegevorrichtung zum Aufzeichnen eines Neigungssignals und zum Ausführen der Gewichtsbestimmung abhängig vom Neigungssignal ausgelegt ist.

## Revendications

1. Procédé pour la détermination du poids d'une charge (2) soulevée par un actionneur (27), dans lequel la détermination de poids est basée sur au moins un déplacement de l'actionneur vers le haut et un déplacement de celui-ci vers le bas, dans lequel l'actionneur est déplacé du fait d'un flux (20) initié par un système de tubage hydraulique, dans lequel la pression hydraulique est mesurée au moyen d'un manomètre (16), moyennant quoi un signal de pression est généré, et en ce qu'un paramètre dépendant d'une déviation (9) est généré par le biais d'un signal de flux (11), lequel est basé sur la vitesse de déplacement de l'actionneur, et par le biais d'un point de réglage (3), et ce qu'un paramètre de régulation (12) est généré sur la base de ceci pour la régulation de l'actionneur, **caractérisé en ce qu'**un paramètre dépendant d'une déviation est enregistré au moyen d'un paramètre de régulation, et **en ce qu'**une détermination de poids est effectuée en fonction du paramètre dépendant d'une déviation et du paramètre de régulation.

2. Procédé de détermination de poids selon la revendication 1, dans lequel un paramètre dépendant de la position de l'actionneur est mesuré au moyen d'un indicateur de position (7) et d'un capteur de position (8), moyennant quoi un paramètre dépendant de la position est généré, et dans lequel la détermination de poids est effectuée en fonction du paramètre dépendant de la position.

3. Procédé de détermination de poids selon l'une quelconque des revendications précédentes, dans lequel un système de décompression (22) est introduit pour réduire la consommation de pression et de puissance, et dans lequel la détermination de poids est effectuée au moyen dudit système de décompression afin de réduire la consommation de puissance.

4. Procédé de détermination de poids selon l'une quelconque des revendications précédentes, dans lequel un paramètre dépendant d'oscillations amorties dans le dispositif de levage est généré par le biais d'un signal de pression ou d'un signal d'inclinaison, moyennant quoi un paramètre dépendant de l'oscillation est généré, et dans lequel la détermination de poids est effectuée en fonction du paramètre dépendant de l'oscillation.

5. Procédé de détermination de poids selon l'une quelconque des revendications précédentes, dans lequel un paramètre dépendant de la température du fluide hydraulique est mesuré à l'aide d'une sonde de température susceptible de former une partie intégrante du manomètre (16), moyennant quoi un paramètre dépendant de la température est généré, et dans lequel la détermination de poids est effectuée en fonction du paramètre dépendant de la température.

6. Procédé de détermination de poids selon l'une quelconque des revendications précédentes, dans lequel l'inclinaison de l'actionneur par rapport à la direction de la gravité est mesuré à l'aide d'un clinomètre (14), moyennant quoi un paramètre d'inclinaison est généré, et un paramètre dépendant de l'inclinaison est généré, et dans lequel la détermination de poids est effectuée en fonction du paramètre dépendant de l'inclinaison.

7. Dispositif de pesage consistant en un système comprenant un processeur destiné à la détermination du poids d'une charge soulevée par un actionneur, dans lequel la détermination de poids est basée sur au moins un déplacement vers le haut et vers le bas de l'actionneur, dans lequel l'actionneur est déplacé du fait d'un flux initié (20) dans un système de tubage hydraulique, dans lequel la pression hydraulique est mesurée à l'aide d'un manomètre (16), moyennant quoi un signal de pression est généré, et dans lequel un signal de déviation (9) est généré par le biais d'un signal de flux (11), lequel est basé sur la vitesse de déplacement de l'actionneur et d'un point de réglage (3), et dans lequel un signal de régulation (12) destiné à réguler l'actionneur est généré sur la base du signal de déviation, et dans lequel le signal de régulation, entre autres, est généré sur la base de moyens hydrauliques, mécaniques, électroniques, logiciels ou d'une combinaison de ceux-ci, mais sans pour autant s'y limiter, **caractérisé en ce que** le dispositif de pesage est conçu pour enregistrer un signal de déviation et pour utiliser un signal de régulation et pour effectuer une détermination de poids en fonction du signal de déviation et du signal de régulation.

8. Dispositif de pesage selon la revendication 7, comprenant un indicateur de position (7) et un capteur de position (8), **caractérisé par** une mesure de position en un point ou en plusieurs points, entre autres sur la base de principes magnétiques, inductifs, optiques, mécaniques, hydrauliques ou ultrasoniques.

9. Dispositif de pesage selon l'une quelconque des revendications 7 ou 8, dans lequel une soupape de décompression (22) a été introduite pour réduire la pression et la consommation de puissance, et dans lequel la soupape de décompression réduit la consommation de puissance.

10. Dispositif de pesage selon l'une quelconque des revendications 7 à 9, dans lequel des oscillations amorties du signal de pression ou du signal d'inclinaison du dispositif de levage sont mesurées, moyennant quoi un signal d'oscillation est généré, et dans lequel la détermination de poids est effectuée en fonction du signal d'oscillation.

11. Dispositif de pesage selon l'une quelconque des revendications 7 à 10, dans lequel la température du fluide hydraulique est mesurée à l'aide d'une sonde de température susceptible de former une partie intégrante du manomètre (16), moyennant quoi un signal de température est généré, et dans lequel la détermination de poids est effectuée en fonction su signal de température.

12. Dispositif de pesage selon l'une quelconque des revendications 7 à 11, dans lequel l'inclinaison de l'actionneur par rapport à la direction de la gravité est mesurée à l'aide d'un clinomètre (14), moyennant quoi un signal d'inclinaison est généré, et dans lequel le dispositif de pesage est conçu pour enregistrer un signal d'inclinaison et pour effectuer la détermination de poids en fonction du signal d'inclinaison.
